# EUROPÄISCHE PATENTSCHRIFT

(11) **EP 3 274 596 B1**
(45) Veröffentlichungstag und Bekanntmachung des Hinweises auf die Patenterteilung: **05.05.2021**
(21) Anmeldenummer: 16710985.9
(22) Anmeldetag: 22.03.2016
(51) Int. Cl.: F16B 13/06

(54) **SPREIZANKER**
SPLIT ANCHOR
CHEVILLE À EXPANSION

(30) Priorität: 27.03.2015 EP 15161414
(43) Veröffentlichungstag der Anmeldung: 31.01.2018
(73) Patentinhaber: Hilti Aktiengesellschaft, 9494 Schaan (LI)
(72) Erfinder: GSTACH, Peter, 9494 Schaan (LI); WINKLER, Bernhard, 6800 Feldkirch (AT); SCHOLZ, Patrick, 9470 Buchs (CH); SPAMPATTI, Matteo, 9470 Buchs (CH); SPROEWITZ, Michael, 9470 Buchs (CH)
(74) Vertreter: Hilti Aktiengesellschaft Corporate Intellectual Property
(86) Internationale Anmeldenummer: PCT/EP2016/056205
(87) Internationale Veröffentlichungsnummer: WO 2016/156100

(56) Entgegenhaltungen:
- EP-A1- 0 308 619
- EP-A1- 0 308 620
- EP-A1- 0 570 170
- WO-A2-2007/145753
- DE-A1-102004 053 255

## Beschreibung

Die Erfindung betrifft einen Spreizanker gemäss dem Oberbegriff des Anspruchs 1. Ein solcher Spreizanker ist ausgestattet mit einer Spreizhülse zur Verankerung an einer Wand eines Bohrlochs und mit einem Ankerbolzen, der durch die Spreizhülse durchgeführt ist, und der einen Spreizbereich zum, insbesondere radialen, Aufspreizen der Spreizhülse aufweist, wobei die Spreizhülse an ihrer Aussenseite eine erste ringförmige Nut aufweist, welche bis zur vorderen, dem Spreizbereich zugewandten Stirnseite der Spreizhülse reicht und somit zur vorderen Stirnseite der Spreizhülse hin offen ist, und wobei die Spreizhülse an ihrer Aussenseite eine zweite ringförmige Nut aufweist, wobei zwischen der ersten ringförmigen Nut und der zweiten ringförmigen Nut ein ringförmiger Steg angeordnet ist.

Die gattungsbildende DE 102004053255 A1 beschreibt einen Spreizanker mit einem Spreizkörper und mit einer Spreizhülse, die durch Einziehen des Spreizkörpers in die Spreizhülse aufspreizbar ist, wobei die Spreizhülse an einem dem Spreizkörper zugewandten, vorderen Rand eine verringerte Wandstärke und ein verringertes Aussenmass aufweist.

Die EP 2029900 A2 offenbart einen Anker mit einer Vielzahl von Ringnuten in der Spreizhülse. Die EP 0308619 A1 beschreibt einen Spreizanker mit einer Spreizhülse, die an ihrer Aussenseite Schneidzähne und eine ringförmige Nut aufweist. Ein weiterer Spreizanker mit Ringnuten in der Spreizhülse geht aus der DE 2046341 A1 hervor, wobei die Ringnuten dort zur Aufnahme von Halteringen dienen. Die EP 0308620 A1 beschreibt einen Spreizanker mit einer hülseninnenseitigen Ringnut.

Die EP 0365475 A2 beschreibt einen Anker, bei dem die Spreizhülse eine stirnseitige Abschrägung und eine hiervon beabstandete erste ringförmige Nut aufweist.

Die EP 0570170 A1 beschreibt einen Spreizanker, der an seiner Spreizhülse Rippen aufweist, die Schneidzähne bilden.

Aufgabe der Erfindung ist es, einen gattungsgemässen Spreizanker so weiterzubilden, dass er bei geringem Herstellungsaufwand besonders zuverlässig und leistungsfähig ist, und insbesondere besonders gute Lastwerte aufweist.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass die zweite ringförmige Nut eine Art Gelenk bildet.

Es ist vorgesehen, dass die Spreizhülse an ihrer Aussenseite eine zweite ringförmige Nut aufweist, und dass zwischen der ersten ringförmigen Nut und der zweiten ringförmigen Nut ein ringförmiger Steg angeordnet ist.

Ein Grundgedanke der Erfindung kann darin gesehen werden, benachbart und beabstandet zur stirnseitig offenen ersten ringförmigen Nut eine zweite ringförmige Nut vorzusehen. An dieser zweiten ringförmigen Nut ist eine lokale Reduzierung der Wandstärke der Spreizhülse gegeben. Die zweite ringförmige Nut kann dadurch eine Art Gelenk bilden, um welches die erste ringförmige Nut beim Spreizvorgang, das heisst beim Einziehen des Spreizbereichs in die Spreizhülse, so radial nach aussen schwenken kann, dass die die erste ringförmige Nut begrenzenden Kanten und vorzugsweise auch der Nutengrund der ersten ringförmigen Nut besonders wirksam gegen die Bohrlochwand wirken und dort insbesondere zur Hinterschnittbildung beitragen können.

Die vordere Stirnseite, bis zu der die erste ringförmige Nut reicht, ist dem Spreizbereich zugewandt und einem gegebenenfalls vorhandenen Hülsenanschlag am Ankerbolzen abgewandt. Da die erste ringförmige Nut bis zur vorderen Stirnseite der Spreizhülse reicht, ist die erste ringförmige Nut zur vorderen Stirnseite der Spreizhülse hin offen. Dies kann insbesondere beinhalten, dass die erste ringförmige Nut lediglich eine einzige Flanke aufweist, nämlich eine rückwärtige Flanke, die am Übergang zwischen der ersten ringförmigen Nut und dem ringförmigen Steg ausgebildet ist. Die zweite ringförmige Nut hingegen kann erfindungsgemäss zweiseitig begrenzt sein, das heisst sie weist zweckmässigerweise sowohl eine vordere Flanke auf, die am Übergang zwischen dem ringförmigen Steg und der zweiten ringförmigen Nut ausgebildet ist, als auch eine der ersten Flanke gegenüberliegende, rückwärtige Flanke. Die verschiedenen Flanken sind insbesondere in einem Längsschnitt der Spreizhülse vorhanden.

Die Spreizhülse kann einen oder mehrere, vorzugsweise in Längsrichtung verlaufende, Spreizschlitze aufweisen, welche die Spreizhülse in Spreizlappen unterteilen können, und welche auch die beiden ringförmigen Nuten durchbrechen können. Die beiden Nuten verlaufen vorzugsweise parallel zueinander, was für eine besonders gleichmässige Krafteinleitung sorgen kann und auch fertigungstechnische Vorteile haben kann. Insbesondere kann die zweite ringförmige Nut durch den ringförmigen Steg von der ersten ringförmigen Nut getrennt sein.

Vorzugsweise bestehen die Spreizhülse und/oder der Ankerbolzen aus einem Metallmaterial. Zweckmässigerweise ist die Spreizhülse einstückig ausgebildet und/oder ist der Ankerbolzen einstückig ausgebildet.

Im Spreizbereich verjüngt sich der Ankerbolzen nach hinten, in Richtung zum gegebenenfalls vorhanden Hülsenanschlag hin, das heisst im Spreizbereich nimmt der Querschnitt des Ankerbolzens nach vorne hin zu. Im nicht-verspreizten Ausgangszustand des Spreizankers befindet sich die Spreizhülse zumindest bereichsweise zwischen dem Spreizbereich und dem Hülsenanschlag. Im gesetzten Zustand des Spreizankers ist der Spreizbereich in die Spreizhülse eingezogen. Der Spreizbereich kann beispielsweise zumindest bereichsweise konisch ausgebildet sein und somit auch als Spreizkonus bezeichnet werden. Durch eine axiale Verschiebung des Spreizbereichs, vorzugsweise zusammen mit dem Ankerbolzen, relativ zur Spreizhülse kann der Spreizbereich des Ankerbolzens in die Spreizhülse eingezogen und die Spreizhülse dabei zur Verankerung im Bohrloch radial aufgeweitet werden. Besonders bevorzugt ist es, dass der Spreizbereich endnäher am Ankerbolzen angeordnet ist als der Hülsenanschlag. Das Bohrloch kann insbesondere in einem Betonsubstrat ausgebildet sein. Die Bohrlochwand, an der die Spreizhülse zur Anlage kommt und verankert wird, kann bevorzugt etwa zylindrisch ausgebildet sein.

Soweit von der Axialrichtung und der Radialrichtung die Rede ist, kann sich dies insbesondere auf die Längsachse des Ankerbolzens beziehen. Unter der Innenseite der Spreizhülse kann insbesondere diejenige Seite verstanden werden, welche dem Ankerbolzen zugewandt ist, und unter der Aussenseite der Spreizhülse diejenige Seite, welche dem Ankerbolzen abgewandt ist.

Besonders bevorzugt ist es, dass der ringförmige Steg eine kleinere Breite aufweist als die erste ringförmige Nut und/oder eine kleinere Breite aufweist als die zweite ringförmige Nut. Alternativ oder zusätzlich kann der Abstand der zweiten ringförmigen Nut von der vorderen Stirnseite der Spreizhülse kleiner sein als das doppelte des Abstandes des ringförmigen Steges von der vorderen Stirnseite der Spreizhülse. Gemäss diesen Ausführungsformen ist der ringförmige Steg vergleichsweise schmal, so dass die zweite ringförmige Nut vergleichsweise nahe an der ersten ringförmigen Nut liegt. Damit können die beiden ringförmigen Nuten beim Spreizvorgang besonders wirksam wechselwirken, so dass die Leistungsfähigkeit des Ankers noch weiter gesteigert werden kann. Soweit von der Breite die Rede ist, kann diese insbesondere in Längsrichtung des Spreizankers, das heisst im Längsschnitt der Spreizhülse gemessen werden, wobei die Flanken vorzugsweise den jeweiligen Nuten und nicht dem Steg zugerechnet werden.

Eine weitere bevorzugte Ausgestaltung liegt darin, dass die erste ringförmige Nut eine grössere Breite aufweist als die zweite ringförmige Nut. Demgemäss ist die zweite ringförmige Nut vergleichsweise schmal. Die ringförmigen Nuten sind damit besonders gut an ihre jeweilige Funktionalität angepasst, so dass bei besonders geringem Materialeinsatz die Leistungsfähigkeit des Ankers noch weiter gesteigert werden kann.

Es kann darüber hinaus vorgesehen sein, dass die erste ringförmige Nut einen zylindrischen Nutengrund aufweist und/oder dass die zweite ringförmige Nut einen zylindrischen Nutengrund aufweist. Dies kann beispielsweise funktional und fertigungstechnisch vorteilhaft sein, insbesondere wenn die beiden Nuten in einem Längswalzverfahren, bei dem die Rotationsachse der Formwalzen senkrecht zu den Nuten verläuft, geformt werden.

Zusätzlich oder alternativ kann vorgesehen werde, dass die erste ringförmige Nut und die zweite ringförmige Nut dieselbe Tiefe aufweisen. Auch dies kann fertigungstechnisch und funktional vorteilhaft sein

Zweckmässigerweise weist die zweite ringförmige Nut zumindest eine angeschrägte Flanke, insbesondere zwei angeschrägte Flanken, auf. Unter einer angeschrägten Flanke kann insbesondere eine solche Flanke verstanden werden, welche im Längsschnitt unter einem von 90° verschiedenen Winkel zum Nutengrund und/oder zur Hülsenaussenwand verläuft. Hierdurch kann die Funktionalität und die Zuverlässigkeit noch weiter verbessert werden, da auch mit vergleichsweise kleinvolumigen zweiten ringförmigen Nuten eine zuverlässige Gelenkfunktion realisiert werden kann. Die beiden Flanken können beispielsweise einen Winkel von 60° einschliessen.

Eine weitere vorteilhafte Ausgestaltung besteht darin, dass die Spreizhülse auf ihrer Innenseite eine Anschrägung aufweist, aufgrund derer die Wandstärke der Spreizhülse zur vorderen Stirnseite der Spreizhülse hin abnimmt. Vorzugsweise reicht die Anschrägung bis zur vorderen Stirnseite der Spreizhülse. Dies kann insbesondere im Hinblick auf das Reibungsverhalten zwischen Spreizbereich und Spreizhülse vorteilhaft sein. Die beiden ringförmigen Nuten befinden sich geeigneterweise im Längsschnitt der Spreizhülse betrachtet im Bereich der Anschrägung. Vorzugsweise werden die beiden ringförmigen Nuten von der Anschrägung in Axialrichtung, das heisst in Längsrichtung des Ankers, überdeckt.

Weiterhin ist es bevorzugt, dass der Ankerbolzen ein Aussengewinde aufweist, an dem eine Mutter mit einem zum Aussengewinde korrespondierenden Innengewinde angeordnet ist. Die Mutter kann einerseits in üblicher Art und Weise zum formschlüssigen Festlegen eines Anbauteils am Ankerbolzen dienen. Andererseits kann die Mutter zusammen mit dem Aussengewinde des Ankerbolzens ein Schraubgetriebe bilden, welches eine Drehung der Mutter in eine Axialbewegung des Ankerbolzens umsetzt, durch welche wiederum der Spreizbereich in die Spreizhülse eingezogen und die Spreizhülse aufgespreizt werden kann.

Der Ankerbolzen kann vorzugsweise einen Hülsenanschlag aufweisen, der eine axiale Verschiebung der Spreizhülse vom Spreizbereich hinweg begrenzt. In diesem Fall kann der Anker als sogenannter Bolzenanker ausgeführt sein. Insbesondere kann in diesem Fall der Spreizbereich einstückig mit dem restlichen Ankerbolzen ausgebildet sein. Die Spreizhülse kann aber auch bis zum Aussengewinde des Ankerbolzens reichen. In diesem Fall kann der Anker als sogenannter Hülsenanker ausgeführt sein. Insbesondere kann in diesem Fall der Spreizbereich über ein Schraubgewinde mit dem restlichen Ankerbolzen verbunden sein. Der Hülsenanschlag kann vorzugsweise durch einen Kreisring gebildet werden. Der Hülsenanschlag kann beispielsweise an einen ringförmigen Steg ausgebildet sein, der den Ankerbolzen aussenseitig umläuft.

Die Nuten können vorzugsweise in einem Längswalzverfahren angeformt werden, bei dem ein Formwerkzeug parallel zur Vorderkante des Hülsenrohlings bewegt wird.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
Figur 1: eine Seitenansicht eines erfindungsgemässen Spreizankers;
Figur 2: eine Seitenansicht des Ankerbolzens des Spreizankers aus Figur 1 ohne Spreizhülse und ohne Mutter;
Figur 3: eine abgewickelte Ansicht der Spreizhülse des Spreizankers aus Figur 1 mit Blickrichtung auf die Aussenseite der Spreizhülse;
Figur 4: eine abgewickelte Ansicht der Spreizhülse des Spreizankers aus Figur 1 mit Blickrichtung auf die Innenseite der Spreizhülse; und
Figur 5: eine Längsschnittansicht durch den vorderen Bereich der Spreizhülse des Spreizankers aus Figur 1.

Die Figuren zeigen ein Ausführungsbeispiel eines erfindungsgemässen Spreizankers. Der Anker weist einen Ankerbolzen 20 sowie eine Spreizhülse 10 auf, wobei die Spreizhülse 10 den Ankerbolzen 20 ringförmig umgibt. Der Ankerbolzen 20 weist einen Halsbereich 27 mit zumindest annähernd konstantem Querschnitt und im Anschluss an den Halsbereich 27 im vorderen Endbereich des Ankerbolzens 20 einen Spreizbereich 28 für die Spreizhülse 10 auf, in welchem sich der Ankerbolzen 20 ausgehend vom Halsbereich 27 zu seinem vorderen Ende hin aufweitet, das heisst in welchem der Querschnitt des Ankerbolzens 20 zum Aufweiten der Spreizhülse 10 nach vorne hin, bevorzugt kontinuierlich, zunimmt. Vorzugsweise kann der Ankerbolzen 20 im Spreizbereich 28 konisch ausgebildet sein. Der Ankerbolzen 20 weist ferner einen beispielsweise als Kreisring ausgebildeten Hülsenanschlag 22 auf, der eine Axialbewegung der Spreizhülse 10 zum rückwärtigen Ende des Ankerbolzens 20 hin, das heisst vom Spreizbereich 28 hinweg, begrenzt. Der Hülsenanschlag 22 ist an einer Ringschulter 23 ausgebildet, welche den Ankerbolzen 20 umläuft.

An seinem dem Spreizbereich 28 gegenüberliegenden rückwärtigen Endbereich weist der Ankerbolzen 20 ein Aussengewinde 34 auf, auf dem eine Mutter 40 mit korrespondierendem Innengewinde angeordnet ist.

Die Spreizhülse 10 weist mehrere Spreizschlitze 13 auf, welche sich von der vorderen Stirnseite 19 der Spreizhülse 10, die dem Spreizbereich 28 zugewandt ist, in die Spreizhülse 10 hinein erstrecken. Zwischen diesen Spreizschlitzen 13 sind Spreizlappen gebildet.

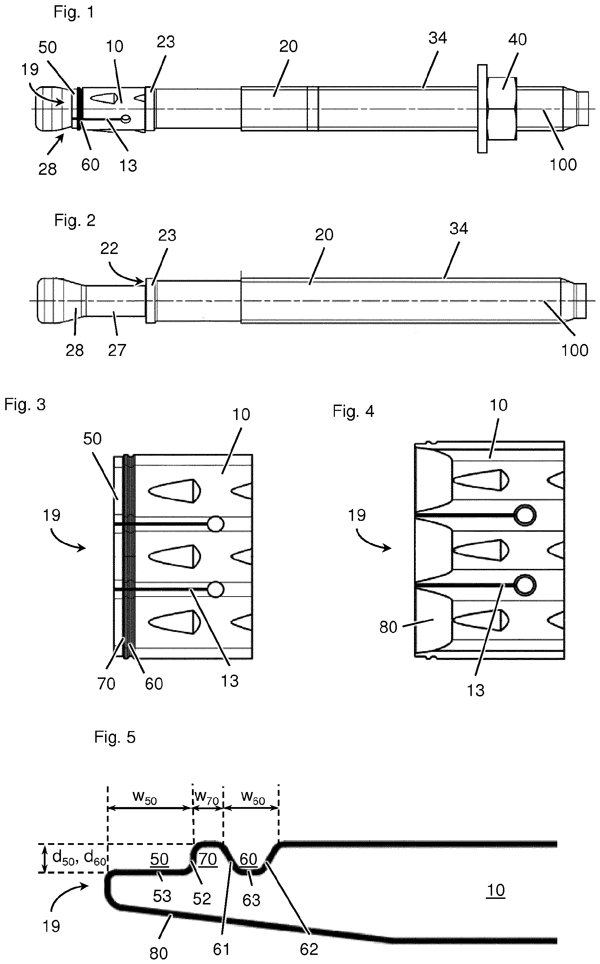

Im Bereich ihrer in den Figuren 1, 3, 4 und 5 links liegenden, vorderen Stirnseite 19 weist die Spreizhülse 10 auf ihrer Aussenseite, das heisst auf der Seite, welche dem Ankerbolzen 20 abgewandt ist, eine erste ringförmige Nut 50 auf. Die erste ringförmige Nut 50 ist zur vorderen Stirnseite 19 der Spreizhülse 10 hin offen und weist im Längsschnitt nur eine einzige Flanke, nämlich eine rückwärtige Flanke 52 auf. Der Nutengrund 53 der ersten ringförmigen Nut 50 ist etwa zylindrisch ausgeführt. Darüber hinaus weist die Spreizhülse 10 auf ihrer Aussenseite eine zweite ringförmige Nut 60 auf. Zwischen der ersten ringförmigen Nut 50 und der zweiten ringförmigen Nut 60 ist ein ringförmiger Steg 70 gebildet. Die zweite ringförmige Nut 60 weist einen zylindrischen Nutengrund 63 auf, der von einer vorderen Flanke 61 und einer rückwärtigen Flanke 62 begrenzt wird. Die beiden Flanken sind angeschrägt und verlaufen im dargestellten Ausführungsbeispiel unter einem Winkel von 30° zur Längsachse 100 des Ankers.

Die Breite w₇₀ des ringförmigen Stegs 70 ist kleiner als die Breite w₅₀ der ersten ringförmigen Nut 50 und kleiner als die Breite w₆₀ der zweiten ringförmigen Nut 60. Die Breite w₅₀ der ersten ringförmigen Nut 50 ist grösser als die Breite w₆₀ der zweiten ringförmigen Nut 60. Die Tiefe d₅₀ der ersten ringförmigen Nut 50 ist gleich der Tiefe d₆₀ der zweiten ringförmigen Nut 60. Die Breite w wird hierbei in fachüblicher Weise parallel zur Längsachse 100 des Ankers gemessen und die Tiefe d senkrecht hierzu.

Auf ihrer Innenseite, das heisst auf der Seite, welche dem Ankerbolzen 20 zugewandt ist, weist die Spreizhülse 10 eine Anschrägung 80 auf, welche bis zur vorderen Stirnseite 19 der Spreizhülse 10 reicht, und aufgrund derer die Wandstärke der Spreizhülse 10 zur vorderen Stirnseite 19 hin abnimmt. Im Längsschnitt der Spreizhülse 10 betrachtet befinden sich die beiden Nuten 50, 60 und der Steg 70 einerseits und die Anschrägung 80 andererseits auf entgegengesetzten Seiten der Spreizhülse 10, wobei die Anschrägung 80 die beiden Nuten 50, 60 und den Steg 70 axial überlappt. Die Anschrägung 80 ist dem Spreizbereich 28 des Ankerbolzens 20 zugewandt, so dass der Spreizbereich 28 gegen die Anschrägung 80 wirken kann.

Beim Setzen des Spreizankers wird der Ankerbolzen 20 mit dem Spreizbereich 28 voran in Richtung der Längsachse 100 des Spreizankers in ein Bohrloch geschoben. Aufgrund des Hülsenanschlags 22, der eine Verschiebung der Spreizhülse 10 zum hinteren Ende des Ankerbolzens 20 blockiert, wird dabei auch die Spreizhülse 10 in das Bohrloch eingebracht. Sodann wird der Ankerbolzen 20, beispielsweise durch Anziehen der Mutter 40, wieder ein Stück weit aus dem Bohrloch herausgezogen. Aufgrund ihrer Reibung mit der Bohrlochwand bleibt die Spreizhülse 10 dabei zurück und es kommt zu einer axialen Verschiebung des Ankerbolzens 20 relativ zur Spreizhülse 10, im Verlauf derer der Spreizbereich 28 des Ankerbolzens 20 immer tiefer so in die Spreizhülse 10 eindringt, dass die Spreizhülse 10 vom Spreizbereich 28 des Ankerbolzens 20 radial aufgeweitet und mit der Wand des Bohrlochs verpresst wird. Durch diesen Mechanismus wird der Spreizanker im Substrat fixiert. Beim Aufweiten der Spreizhülse 10 kann die vordere, erste ringförmige Nut 50 um die zweite ringförmige Nut 60 herum kippen, so dass der Nutengrund 53 der ersten ringförmigen Nut 50 besonders effektiv gegen die Wand des Bohrlochs wirken kann. Insbesondere können dabei an der vorderen Kante der ersten ringförmige Nut 50 und/oder an der Kante zwischen dem Steg 70 und der rückwärtigen Flanke 52 der ersten ringförmigen Nut 50 Hinterschnitte in der Wand des Bohrlochs gebildet werden. Mittels der Mutter 40 kann ein Anbauteil am Anker und somit am Substrat festgelegt werden.

## Patentansprüche

1. Spreizanker
- mit einer Spreizhülse (10) zur Verankerung an einer Wand eines Bohrlochs
- und mit einem Ankerbolzen (20), der durch die Spreizhülse (10) durchgeführt ist, und der einen Spreizbereich (28) zum Aufspreizen der Spreizhülse (10) aufweist,
- wobei die Spreizhülse (10) an ihrer Aussenseite eine erste ringförmige Nut (50) aufweist, welche bis zur vorderen, dem Spreizbereich (28) zugewandten Stirnseite (19) der Spreizhülse (10) reicht und somit zur vorderen Stirnseite (19) der Spreizhülse (10) hin offen ist, und
- wobei die Spreizhülse (10) an ihrer Aussenseite eine zweite ringförmige Nut (60) aufweist, wobei zwischen der ersten ringförmigen Nut (50) und der zweiten ringförmigen Nut (60) ein ringförmiger Steg (70) angeordnet ist,
**dadurch gekennzeichnet,**
**dass** die zweite ringförmige Nut (60) eine Art Gelenk bildet.

2. Spreizanker nach Anspruch 1,
**dadurch gekennzeichnet,**
**dass** der ringförmige Steg (70) eine kleinere Breite aufweist als die erste ringförmige Nut (50) und eine kleinere Breite aufweist als die zweite ringförmige Nut (60), und dass die erste ringförmige Nut (50) eine grössere Breite aufweist als die zweite ringförmige Nut (60).

3. Spreizanker nach einem der vorstehenden Ansprüche,
**dadurch gekennzeichnet,**
**dass** die erste ringförmige Nut (50) einen zylindrischen Nutengrund (53) aufweist, und dass die zweite ringförmige Nut (60) einen zylindrischen Nutengrund (63) aufweist.

4. Spreizanker nach einem der vorstehenden Ansprüche,
**dadurch gekennzeichnet,**
**dass** die erste ringförmige Nut (50) und die zweite ringförmige Nut (60) dieselbe Tiefe aufweisen.

5. Spreizanker nach einem der vorstehenden Ansprüche,
**dadurch gekennzeichnet,**
**dass** die zweite ringförmige Nut (60) zwei angeschrägte Flanken (61, 62) aufweist.

6. Spreizanker nach einem der vorstehenden Ansprüche,
**dadurch gekennzeichnet,**
**dass** die Spreizhülse (10) auf ihrer Innenseite eine Anschrägung (80) aufweist, aufgrund derer die Wandstärke der Spreizhülse (10) zur vorderen Stirnseite (19) der Spreizhülse (10) hin abnimmt.

7. Spreizanker nach einem der vorstehenden Ansprüche,
**dadurch gekennzeichnet,**
**dass** der Ankerbolzen (20) ein Aussengewinde (34) aufweist, an dem eine Mutter (40) mit einem zum Aussengewinde (34) korrespondierenden Innengewinde angeordnet ist.

8. Spreizanker nach einem der vorstehenden Ansprüche,
**dadurch gekennzeichnet,**
**dass** der Ankerbolzen (20) einen Hülsenanschlag (22) aufweist, der eine axiale Verschiebung der Spreizhülse (10) vom Spreizbereich (28) hinweg begrenzt.

## Claims

1. Expansion anchor
- comprising an expansion sleeve (10) for being anchored to a wall of a borehole
- and comprising an anchor bolt (20) which is guided through the expansion sleeve (10) and has an expansion region (28) for expanding the expansion sleeve (10),
- the expansion sleeve (10) having a first annular groove (50) on its outside, which groove extends up to the front end face (19) of the expansion sleeve (10) facing the expansion region (28) and thus is open at the front end face (19) of the expansion sleeve (10), and
- the expansion sleeve (10) having a second annular groove (60) on its outside, an annular ridge (70) being arranged between the first annular groove (50) and the second annular groove (60),
**characterized in that** the second annular groove (60) forms a kind of joint.

2. Expansion anchor according to claim 1, **characterized in that** the annular ridge (70) has a smaller width than the first annular groove (50) and a smaller width than the second annular groove (60), and **in that** the first annular groove (50) has a greater width than the second annular groove (60).

3. Expansion anchor according to either of the preceding claims, **characterized in that** the first annular groove (50) has a cylindrical groove base (53), and **in that** the second annular groove (60) has a cylindrical groove base (63).

4. Expansion anchor according to any of the preceding claims, **characterized in that** the first annular groove (50) and the second annular groove (60) have the same depth.

5. Expansion anchor according to any of the preceding claims, **characterized in that** the second annular groove (60) has two beveled flanks (61, 62).

6. Expansion anchor according to any of the preceding claims, **characterized in that** the expansion sleeve (10) has a bevel (80) on its inside, as a result of which the wall thickness of the expansion sleeve (10) decreases toward the front end face (19) of the expansion sleeve (10).

7. Expansion anchor according to any of the preceding claims, **characterized in that** the anchor bolt (20) has an external thread (34) on which a nut (40) having an internal thread corresponding to the external thread (34) is arranged.

8. Expansion anchor according to any of the preceding claims, **characterized in that** the anchor bolt (20) has a sleeve stop (22) which limits axial movement of the expansion sleeve (10) away from the expansion region (28).

## Revendications

1. Ancrage expansible
- comportant un manchon expansible (10) destiné à être ancré sur une paroi d'un trou de forage
- et comportant un boulon d'ancrage (20) qui est passé à travers le manchon expansible (10) et qui présente une zone d'expansion (28) destinée à l'expansion du manchon expansible (10),
- le manchon expansible (10) présentant, sur sa face extérieure, une première rainure annulaire (50) qui s'étend jusqu'à la face frontale avant (19) du manchon expansible (10) orientée vers la zone d'expansion (28), et qui est donc ouverte vers la face frontale avant (19) du manchon expansible (10), et
- le manchon expansible (10) présentant une seconde rainure annulaire (60) sur sa face extérieure, un élément jointif annulaire (70) étant disposé entre la première rainure annulaire (50) et la seconde rainure annulaire (60),
**caractérisé**
**en ce que** la seconde rainure annulaire (60) forme une sorte d'articulation.

2. Ancrage expansible selon la revendication 1,
**caractérisé**
**en ce que** l'élément jointif annulaire (70) présente une largeur inférieure à celle de la première rainure annulaire (50) et une largeur inférieure à celle de la seconde rainure annulaire (60), et **en ce que** la première rainure annulaire (50) présente une largeur supérieure à celle de la seconde rainure annulaire (60).

3. Ancrage expansible selon l'une des revendications précédentes,
**caractérisé**
**en ce que** la première rainure annulaire (50) présente une base de rainure cylindrique (53) et **en ce que** la seconde rainure annulaire (60) présente une base de rainure cylindrique (63).

4. Ancrage expansible selon l'une des revendications précédentes,
**caractérisé**
**en ce que** la première rainure annulaire (50) et la seconde rainure annulaire (60) présentent la même profondeur.

5. Ancrage expansible selon l'une des revendications précédentes,
**caractérisé**
**en ce que** la seconde rainure annulaire (60) présente deux flancs biseautés (61, 62).

6. Ancrage expansible selon l'une des revendications précédentes,
**caractérisé**
**en ce que** le manchon expansible (10) présente, sur sa face intérieure, un biseau (80) qui amène l'épaisseur de paroi du manchon expansible (10) à diminuer vers la face frontale avant (19) du manchon expansible (10).

7. Ancrage expansible selon l'une des revendications précédentes,
**caractérisé**
**en ce que** le boulon d'ancrage (20) présente un filetage extérieur (34) sur lequel est disposé un écrou (40) comportant un filetage intérieur correspondant au filetage extérieur (34).

8. Ancrage expansible selon l'une des revendications précédentes,
**caractérisé**
**en ce que** le boulon d'ancrage (20) présente une butée de manchon (22) qui limite un déplacement axial du manchon expansible (10) à l'opposé de la zone d'expansion (28).
